# EUROPÄISCHE PATENTANMELDUNG

(11) **EP 3 560 768 A1**
(43) Veröffentlichungstag der Anmeldung: **30.10.2019**
(21) Anmeldenummer: 19167238.5
(22) Anmeldetag: 04.04.2019
(51) Int. Cl.: B60R 16/03

(54) **VERFAHREN ZUM BETREIBEN EINES BORDNETZES EINER BRENNKRAFTMASCHINE UND EINES STEUERGERÄTS**

(30) Priorität: 24.04.2018 DE 102018206247; 20.12.2018 DE 102018133079
(71) Anmelder: VOLKSWAGEN AKTIENGESELLSCHAFT, 38440 Wolfsburg (DE)
(72) Erfinder: Pott, Ekkehard, 38518 Gifhorn (DE); Blei, Ingo, 38110 Braunschweig (DE)
(74) Vertreter: Gulde & Partner

(57) **Zusammenfassung**

Es wird ein Verfahren zum Betreiben eines Bordnetzes einer Brennkraftmaschine, insbesondere einer Brennkraftmaschine eines Fahrzeugs und eines Steuergeräts bereitgestellt. Solch ein Verfahren umfasst dabei die folgenden Schritte: Versorgen des Bordnetzes mit Energie in Form von elektrischem Strom mittels mindestens eines Generators und/oder mindestens einer Batterie; Versorgen des Steuergeräts und von mindestens zwei Verbrauchern mittels Energie in Form von elektrischem Strom des Bordnetzes; Festlegen einer Stromgrenze des mindestens einen Generators, bis zu welcher eine Versorgung des Bordnetzes ausschließlich mittels des mindestens einen Generators mit Energie in Form von elektrischem Strom vollzogen wird; wobei das Steuergerät beim Erreichen und/oder Überschreiten der Stromgrenze des mindestens einen Generators zumindest einen der Verbraucher zumindest zeitweise abschaltet und/oder dessen Leistung abregelt. Zudem wird ein Steuergerät (200) zum Betreiben eines Bordnetzes einer Brennkraftmaschine, insbesondere einer Brennkraftmaschine eines Fahrzeugs, bereitgestellt.

## Beschreibung

Die Erfindung betrifft ein Verfahren zum Betreiben eines Bordnetzes einer Brennkraftmaschine, insbesondere einer Brennkraftmaschine eines Fahrzeugs, und eines Steuergeräts.

Eine Brennkraftmaschine, beispielsweise für ein Kraftfahrzeug, produziert während des Betriebs Abgase beziehungsweise Emissionen, welche mittels Katalysatoren in ihrer Zusammensetzung chemisch nachbehandelt werden, bevor sie in die Atmosphäre emittiert werden. Diese Änderung erfolgt über Reaktionen im Katalysator. Diese Reaktionen weisen ein breites Temperaturfeld oberhalb einer Light-Off-Temperatur auf, um die gewünschten Umwandlungsraten entsprechend erreichen zu können. Dabei kann eine ideale Temperatur insbesondere direkt nach dem Start noch nicht erreicht sein, sodass Maßnahmen unternommen werden, um die Light-Off-Temperatur möglichst schnell zu erreichen. Eine bekannte Maßnahme ist die Beheizung des Katalysators durch eine Lastanhebung der Brennkraftmaschine oder eine Änderung des Wirkungsgrades der Brennkraftmaschine durch eine spätere Zündung (Zündwinkelspätverstellung). Auch kann eine Beheizung des Katalysators und/oder des Abgases selbst mittels eines Heizelements vorgesehen sein.

So ist aus der Druckschrift DE 10 2014 223 491 A1 eine Abgasbehandlungsvorrichtung und ein Verfahren zur Abgasnachbehandlung bekannt. Dabei ist die Abgasbehandlungsvorrichtung für eine Verbrennungskraftmaschine, insbesondere einen Dieselmotor, vorgesehen und umfasst einen in einem Abgasstrang angeordneten, über eine Heizeinrichtung beheizbaren passiven NOₓ-Speicherkatalysator und einen dem passiven NOₓ-Speicherkatalysator nachgeschalteten SCR-Katalysator mit einer Vorrichtung zur Zufuhr einer NH₃ freisetzenden Substanz. Des Weiteren ist eine Steuereinheit vorgesehen, welche die Heizeinrichtung so steuern kann, dass der passive NOₓ-Speicherkatalysator unabhängig von einer durch die Verbrennungskraftmaschine vorgegebenen Abgastemperatur erhitzt wird. In diesem Zusammenhang ist eine Gaszufuhreinrichtung vorgesehen, die eine von der Verbrennungskraftmaschine unabhängige Gasströmung durch den Abgasstrang erzeugen kann, sodass nach dem Abschalten der Verbrennungskraftmaschine für eine vorbestimmte Zeitspanne eine Gasströmung durch den Abgasstrang erzeugt werden kann. Gleichzeitig wird der NOₓ-Speicherkatalysator auf eine Temperatur oberhalb dessen Desorptionstemperatur erhitzt und der SCR-Katalysator wird auf dessen Betriebstemperatur gehalten, wobei der NOₓ-Speicherkatalysator entladen wird.

Aus der Druckschrift WO 2017/063832 A1 ist ein Fahrzeugbordnetz, insbesondere ein Hybridelektrofahrzeug, bekannt. Das Fahrzeugbordnetz beziehungsweise Hybridelektrofahrzeug umfasst dabei mindestens eine Wechselstromeinheit, mindestens eine Gleichstromeinheit und mindestens eine Brückenschaltung zur Bereitstellung von Wechselströmen für die mindestens eine Wechselstromeinheit. Zudem umfasst das Fahrzeugbordnetz beziehungsweise Hybridelektrofahrzeug mindestens eine Halbbrücke mit mindestens einem positivspannungsseitigen Halbleiterschalter und mindestens einem negativspannungsseitigen Halbleiterschalter. In diesem Zusammenhang ist zudem mindestens ein Strompfad vorgesehen, der einen Stromanschluss der mindestens einen Gleichstromeinheit mit einem Stromanschluss zwischen dem mindestens einen positivspannungsseitigen Halbleiterschalter und dem mindestens einen negativspannungsseitigen Halbleiterschalter der mindestens einen Halbbrücke verbindet.

Der Erfindung liegt die Aufgabe zugrunde, ein Verfahren für ein verbessertes Betreiben eines Bordnetzes einer Brennkraftmaschine bereitzustellen, sodass ein zuverlässiger Betrieb des Bordnetzes in allen Betriebszuständen der Brennkraftmaschine gewährleistet wird.

Erfindungsgemäß wird ein Verfahren zum Betreiben eines Bordnetzes einer Brennkraftmaschine, insbesondere einer Brennkraftmaschine eines Fahrzeugs, und eines Steuergeräts bereitgestellt. Solch ein Verfahren umfasst dabei die folgenden Schritte: Versorgen des Bordnetzes mit Energie in Form von elektrischem Strom mittels mindestens eines Generators und/oder mindestens einer Batterie. Anschließend oder zeitgleich erfolgt ein Versorgen des Steuergeräts und von mindestens zwei Verbrauchern mittels Energie in Form von elektrischem Strom des Bordnetzes. Es wird zudem eine Stromgrenze des mindestens einen Generators festgelegt, bis zu welcher eine Versorgung des Bordnetzes ausschließlich mittels des mindestens einen Generators mit Energie in Form von elektrischem Strom vollzogen wird, wobei das Steuergerät bei Erreichen und/oder Überschreiten der Stromgrenze des mindestens einen Generators zumindest einen der Verbraucher zumindest zeitweise abschaltet und/oder dessen Leistung abregelt. Auf diese Weise kann ein verbessertes Betreiben des Bordnetzes der Brennkraftmaschine bereitgestellt werden, sodass ein zuverlässiger Betrieb des Bordnetzes in allen Betriebszuständen der Brennkraftmaschine gewährleistet wird, da eine bedingte Abschaltung von zumindest einem Verbraucher stets eine priorisierte Stromversorgung beispielsweise für einen Aufladevorgang der Batterie oder eine andere Komponente sicherstellt. Auch kann es auf diese Weise während der Versorgung des Bordnetzes mittels des Generators nicht zu einer unerwünschten Entladung der Batterie kommen, sodass beispielsweise eine für einen Startvorgang nötige Energiemenge aus der Batterie nicht unnötig verwendet werden muss. Bei dem Generator kann es sich beispielsweise um eine Lichtmaschine der Brennkraftmaschine des Fahrzeugs handeln, wobei das Fahrzeug beispielsweise ein Kraftfahrzeug für den Straßenverkehr sein kann.

Gemäß einem weiteren Aspekt der Erfindung wird ein Steuergerät zum Betreiben eines Bordnetzes einer Brennkraftmaschine, insbesondere einer Brennkraftmaschine eines Fahrzeugs, bereitgestellt. Das Bordnetz und das Steuergerät sind dabei von mindestens einem Generator und/oder mindestens einer Batterie mit elektrischem Strom versorgbar. Solch ein Steuergerät umfasst zumindest eine elektrische Leitung, welche mit zumindest zwei Verbrauchern verbindbar ist, zumindest eine Recheneinheit und zumindest einen Speicher, wobei in dem Speicher ein Programm abgelegt ist, welches (insbesondere bei wenigstens teilweiser Ausführung in der Recheneinheit) derart eingerichtet ist, das erfindungsgemäße Verfahren auszuführen.

Die zuvor genannten Vorteile gelten soweit übertragbar auch für die vorgesehene Verwendung des Steuergeräts, dessen Verwendung in dem erfindungsgemäßen Verfahren einen weiteren Aspekt der Erfindung betrifft.

Weitere bevorzugte Ausgestaltungen der Erfindung ergeben sich aus den übrigen, in den Unteransprüchen genannten Merkmalen.

So ist in einer weiteren bevorzugten Ausgestaltung der Erfindung vorgesehen, dass ein Abschaltvorgang und/oder ein Leistungsabregelungsvorgang des zumindest einen Verbrauchers zusätzlich in Abhängigkeit zumindest eines Zustandes der Brennkraftmaschine und/oder einer Klassifizierung des zumindest einen Verbrauchers vollzogen wird. So kann auf vorteilhafte Weise die Stromauslastung des Bordnetzes bei gleichzeitigem zumindest teilweisem Betrieb der Verbraucher reguliert werden.

Auch ist in einer weiteren bevorzugten Ausgestaltung der Erfindung vorgesehen, dass der zumindest eine Zustand der Brennkraftmaschine ausgewählt ist aus: Motorbetriebspunkt, Dynamik einer Betriebspunktänderung, Umgebungsdruck, Umgebungstemperatur, Kühlmitteltemperatur, Abgastemperatur vor und/oder hinter einem Turbolader der Brennkraftmaschine, Temperatur zumindest einer Abgasreinigungskomponente, modellierte Partikelrohemissionen in einem aktuellen Betriebspunkt, modellierte Stickoxid-Rohemissionen in einem aktuellen Betriebspunkt, Füllstand in einem Partikelfilter der Brennkraftmaschine, Füllstand eines Stickoxidspeicherkatalysators der Brennkraftmaschine und/oder ein eingelegter Gang eines zugehörigen Fahrzeugs von der Brennkraftmaschine. So kann auf vorteilhafte Weise das Betriebskennfeld der Brennkraftmaschine mit dem Betrieb des Bordnetzes in Verbindung gebracht werden. Dabei ist implizit gemeint, dass die einzelnen zuvor genannten Zustände entsprechend jeweils einzeln gemessen und in modellierter Form vorliegen, sodass eine entsprechend technische Anwendung möglich ist.

Ferner ist in einer weiteren bevorzugten Ausgestaltung der Erfindung vorgesehen, dass eine Klassifizierung des zumindest einen Verbrauchers in Dauerverbraucher und Kurzzeitverbraucher vollzogen wird, sodass der Abschaltvorgang und/oder der Leistungsabregelungsvorgang des zumindest einen Verbrauchers gemäß einer Entscheidungsstruktur basierend auf dieser Klassifizierung mittels des Steuergeräts vollzogen wird. So kann auf vorteilhafte Weise eine Priorisierung und Einteilung der unterschiedlichen Verbraucher für die Entscheidungsstruktur getroffen werden.

Zudem ist in einer weiteren bevorzugten Ausgestaltung der Erfindung vorgesehen, dass die Klassifizierung des zumindest einen Verbrauchers eine Unterteilung in Komfortverbraucher und Systemverbraucher umfasst, sodass der Abschaltvorgang und/oder der Leistungsabregelungsvorgang des zumindest einen Verbrauchers gemäß einer Entscheidungsstruktur basierend auf dieser unterteilten Klassifizierung mittels des Steuergeräts vollzogen wird. Eine solche Klassifizierung kann also entsprechend zweier Klassen erfolgen. Zum einen kann eine Klassifizierung von Dauerverbrauchern stattfinden. In diese Klasse können alle Verbraucher übernommen werden, die einen dauerhaften oder verlängerten Betrieb erfordern. Ein verlängerter Betrieb kann definiert sein, als eine Dauer von mehr als 2, mehr als 3, mehr als 5, mehr als 8 oder mehr als 10 Sekunden. Eine Priorisierung und Einteilung der unterschiedlichen Verbraucher für die Entscheidungsstruktur kann somit noch besser getroffen werden.

Des Weiteren ist in einer anderen bevorzugten Ausgestaltung der Erfindung vorgesehen, dass der zumindest eine Verbraucher ausgewählt ist aus: Heizelement eines elektrisch beheizbaren Katalysators stromauf oder in einem Substrat des Katalysators, Sitzheizung, Heckscheibenheizung, Frontscheibenheizung, Klimaanlage, zumindest ein Steuergerät, Unterhaltungselektronik, Abblendlicht, Nebellicht, zumindest ein Sensor, emissionsrelevanter Verbraucher, gesetzesrelevanter Verbraucher. Eine Priorisierung und Einteilung der unterschiedlichen Verbraucher für die Entscheidungsstruktur kann somit noch besser getroffen werden. Der genannte Katalysator kann beispielsweise ein Dieseloxidationskatalysator, ein Katalysator zur selektiven Reduktion oder ein Stickoxidspeicherkatalysator sein. Darüber hinaus kann jeder dieser Katalysatoren auch beheizbar oder nicht beheizbar auf der Abgasseite der Brennkraftmaschine angeordnet sein. Dabei sind alle Kombinationen und Reihenfolgen denkbar, die technisch sinnvoll sind. Es können auch mehrere Katalysatoren eines Typs auf der Abgasseite der Brennkraftmaschine angeordnet sein. Das Heizelement kann elektrisch betrieben werden. Dabei kann vorzugsweise eine Leistungsstärke von 2 bis 5 kW, bevorzugt eine Leistungsstärke von 2,8 bis 3,7 kW, besonders bevorzugt eine Leistungsstärke von 3,0 bis 3,5 kW eingebaut sein. Das Heizelement des Katalysators kann entsprechend betrieben werden. Die genannten Leistungen sind besonders vorteilhaft zum schnellen Erreichen der Light-Off-Temperatur. Das Heizelement des Katalysators kann den Katalysator auf eine Temperatur entsprechend einer Aktivierungstemperatur für die Funktionalität des Katalysators bringen. Diese Temperatur kann bevorzugt bei zumindest 110 °C, zumindest 140 °C, zumindest 180 °C, zumindest 200 °C oder zumindest 230 °C liegen. Dadurch kann auf vorteilhafte Weise eine Abgasnachbehandlung durch die Funktionalität des Katalysators erfolgen, die sonst erst weit später beginnen könnte. Die Funktionalität des Katalysators bedeutet, die katalytisch aktiven Stoffe, zum Beispiel Bariumoxide bei Stickoxidspeicherkatalysatoren oder Platin und andere Metalle, zu aktivieren. Die Aktivierungstemperatur oder Light-Off-Temperatur ist dabei die Temperatur, bei der 50% der entsprechenden Abgaskomponenten umgesetzt werden. Mit anderen Worten kann mittels des vorgestellten Verfahrens also eine Priorisierung und Einteilung der unterschiedlichen Verbraucher für die Entscheidungsstruktur bereitgestellt werden, welches beispielsweise eine vorteilhafte Versorgung des Bordnetzes und des Heizelements des Katalysators mit Energie sicherstellt, sodass beispielsweise eine Abgastemperatur weiter angehoben werden kann, welche zum Beispiel durch eine Lastanhebung der Brennkraftmaschine resultiert. Somit kann also ein verbesserter Betrieb der Abgasanlage und der Brennkraftmaschine sichergestellt werden. Es kann also vorteilhaft während des Betriebs der Brennkraftmaschine und dem wahlweise antreibbaren Verdichter die Leistung optimiert werden und gleichzeitig die Emission von Schadgasen reduziert werden.

Auch ist in einer weiteren bevorzugten Ausgestaltung der Erfindung vorgesehen, dass das Verfahren für maximal 150 Sekunden, insbesondere für maximal 120 Sekunden, vorzugsweise für maximal 100 Sekunden nach einem Start der Brennkraftmaschine betrieben wird. In diesem Zeitraum ist der Effekt des Verfahrens am wirkungsvollsten.

Ferner ist in einer weiteren bevorzugten Ausgestaltung der Erfindung vorgesehen, dass das Verfahren zumindest bei einem Kaltstart der Brennkraftmaschine betrieben wird. Dabei ist der Kaltstart insbesondere durch eine Umgebungstemperatur von höchstens 0 °C, vorzugsweise höchstens -5 °C, besonders bevorzugt höchstens -10 °C, und/oder eine Brennkraftmaschinentemperatur, welche einer Umgebungstemperatur entspricht, charakterisiert. So kann vorteilhaft sichergestellt werden, dass das Verfahren in einem Zustand betrieben wird, der von diesem besonders profitiert. Beispielsweise kann somit von den zuvor genannten Werten implizit abgleitet werden, dass eine Kühlmittel- oder Motoröltemperatur bei einem Kaltstart von dem Motor dann weniger als 5 °C von der aktuellen Umgebungstemperatur abweicht.

Auch ist in einer weiteren bevorzugten Ausgestaltung der Erfindung vorgesehen, dass vor einem Abschaltvorgang und/oder einem Leistungsabregelungsvorgang eines emissionsrelevanten Verbrauchers und/oder eines gesetzesrelevanten Verbrauchers ein Abschaltvorgang und/oder Leistungsabregelungsvorgang eines nicht emissionsrelevanten Verbrauchers und/oder eines nicht gesetzesrelevanten Verbrauchers vollzogen wird. Mit anderen Worten wird die Abschaltung und/oder Abregelung nicht emissions- und/oder gesetzesrelevanter Verbraucher gegenüber emissions- und/oder gesetzesrelevanten Verbrauchern priorisiert. So kann vorteilhaft eine sichere und gesetzeskonforme Betriebsart sichergestellt werden.

Allgemein ist ein emissionsrelevanter Verbraucher dadurch definiert, dass das elektrische Betreiben dieses Verbrauchers eine direkte oder indirekte Auswirkung auf das Emissionsverhalten des Fahrzeugs hat. Als emissionsrelevanter Verbraucher kann beispielsweise ein Motorsteuergerät oder ein elektrisch betriebener Verdichter angesehen werden. Allgemein ist ein gesetzesrelevanter Verbraucher dadurch definiert, dass das elektrische Betreiben dieses Verbrauchers direkt oder indirekt mit einer zu erfüllenden gesetzlichen Norm in dem Land, in welchem das Fahrzeug bewegt beziehungsweise zugelassen wird, in Verbindung steht, beispielsweise gesetzlich vorgesehen ist. Als gesetzesrelevanter Verbraucher kann beispielsweise eine Nebelschlussleuchte angesehen werden.

Zudem ist in einer weiteren bevorzugten Ausgestaltung der Erfindung vorgesehen, dass vor einem Abschaltvorgang und/oder einem Leistungsabregelungsvorgang eines Heizelements eines elektrisch beheizbaren Katalysators stromauf oder in einem Substrat des Katalysators ein Abschaltvorgang und/oder Leistungsabregelungsvorgang eines nicht emissionsrelevanten Verbrauchers und/oder eines nicht gesetzesrelevanten Verbrauchers vollzogen wird. Somit kann eine Unterstützung eines emissionsrelevanten Verbrauchers und/oder eines gesetzesrelevanten Verbrauchers mittels des Heizelements zunächst unterstützt werden, um eine sichere und gesetzeskonforme Betriebsart sicherzustellen, bevor zunächst weniger relevante Verbraucher mit Strom versorgt werden.

Auch ist in einer weiteren bevorzugten Ausgestaltung der Erfindung vorgesehen, dass vor einem Abschaltvorgang und/oder einem Leistungsabregelungsvorgang eines emissionsrelevanten Verbrauchers und/oder eines gesetzesrelevanten Verbrauchers ein Abschaltvorgang und/oder Leistungsabregelungsvorgang eines Heizelements eines elektrisch beheizbaren Katalysators stromauf oder in einem Substrat des Katalysators vollzogen wird. Auf diese Weise kann noch besser sichergestellt werden, dass eine sichere und gesetzeskonforme Betriebsart gewährleistet wird.

Zudem ist in einer weiteren bevorzugten Ausgestaltung der Erfindung vorgesehen, dass der Abschaltvorgang und/oder Leistungsabregelungsvorgang eines Heizelements eines elektrisch beheizbaren Katalysators stromauf oder in einem Substrat des Katalysators zumindest teilweise vollzogen wird. So kann das Abschalten auf vorteilhafte Weise in Intervallen eingeteilt werden. Dieser kurzzeitig abgeschaltete oder abgeregelte Verbraucher kann insbesondere ein Heizelement eines Katalysators sein. Dieser kann, insbesondere für die kurzfristig abgeschaltete Gesamtdauer, eingeschaltet werden, sobald die Grenze des Stroms mit einem Einschalten unterschritten bleibt.

Weiterhin ist in einer weiteren bevorzugten Ausgestaltung der Erfindung vorgesehen, dass ein Abschaltvorgang und/oder ein Leistungsabregelungsvorgang eines nicht emissionsrelevanten Verbrauchers und/oder eines nicht gesetzesrelevanten Verbrauchers für einen Zeitraum von kürzer als 3 Sekunden, insbesondere kürzer als 1,5 Sekunden, vorzugsweise für etwa 2 Sekunden vollzogen wird, wenn ein kurzzeitiger Verbraucher den Strom benötigt. Die zuvor genannten Vorteile sind somit noch besser erreichbar. Allgemein ist ein kurzzeitiger Verbraucher dadurch definiert, dass das elektrische Betreiben dieses Verbrauchers nur äußerst kurz und nicht in einem in Bezug auf die Betriebsdauer des Fahrzeugs längeren zeitlichen Abschnitt ohne Unterbrechung auftritt. Als kurzzeitiger Verbraucher kann beispielsweise ein Blinker oder ein elektrischer Fensterheber angesehen werden.

Die verschiedenen in dieser Anmeldung genannten Ausführungsformen der Erfindung sind, sofern im Einzelfall nicht anders ausgeführt, mit Vorteil miteinander kombinierbar.

Im Folgenden soll die Erfindung anhand von Ausführungsbeispielen näher erläutert werden. Dazu zeigen:
- Figur 1: ein erstes Diagramm einer Strombilanz eines Bordnetzes ohne Anwendung eines Verfahrens zum Betreiben eines Bordnetzes einer Brennkraftmaschine;
- Figur 2: ein zweites Diagramm einer Strombilanz eines Bordnetzes mit Anwendung eines Verfahrens zum Betreiben eines Bordnetzes einer Brennkraftmaschine;
- Figur 3: einen Prozessablauf eines Verfahrens zum Betreiben eines Bordnetzes einer Brennkraftmaschine;
- Figur 4: ein Steuergerät zum Betreiben eines Bordnetzes einer Brennkraftmaschine.

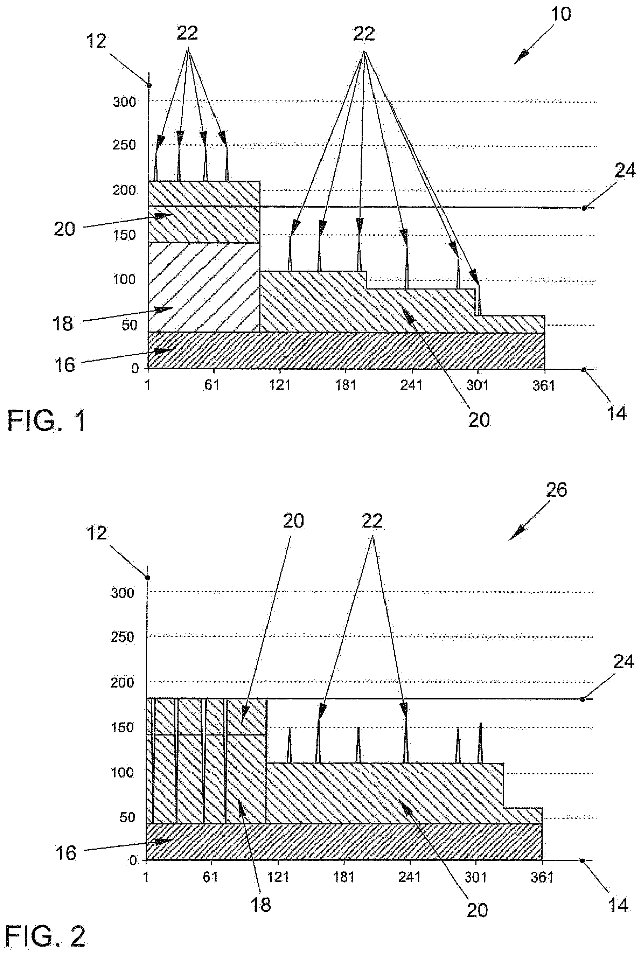

Figur 1 zeigt ein erstes Diagramm 10 einer Strombilanz eines Bordnetzes ohne Anwendung eines Verfahrens zum Betreiben eines Bordnetzes einer Brennkraftmaschine, insbesondere einer Brennkraftmaschine von einem Fahrzeug. Dabei wird auf der Y-Achse 12 der Strombedarf des Bordnetzes in Ampere [A] angezeigt. Auf der X-Achse 14 wird die Zeit in Sekunden [s] angezeigt. Eine erste Fläche 16 zeigt einen Grundstrombedarf an, welcher beispielsweise für Steuergeräte eingesetzt wird. Eine zweite Fläche 18 zeigt den Strombedarf für einen elektrisch beheizbaren Katalysator an, wobei letztendlich hiermit beispielsweise der Strombedarf für ein Heizelement gemeint ist. Eine dritte Fläche 20 zeigt den Strombedarf von Dauerverbrauchern an. Solch ein Dauerverbraucher kann beispielsweise eine Sitzheizung von einem Fahrzeug sein. Zusätzlich wird eine vierte Fläche 22 dargestellt, welche in einzelne Strombedarfsspitzen von Kurzzeitverbrauchern segmentiert ist. Eine eingezeichnete Begrenzungslinie 24 stellt eine Stromgrenze eines Generators dar. Bis zu dieser Begrenzungslinie 24 kann der Strombedarf des Bordnetzes über den Generator abgedeckt werden. Darüber hinaus muss entsprechend auf eine vorgehaltene Batterie zugegriffen werden. Insofern ist in der ersten Zeitspanne zu erkennen, inwiefern diese Begrenzungslinie 24 überschritten wird und somit ein unerwünschter Entladevorgang der Batterie stattfindet.

Figur 2 zeigt ein zweites Diagramm 26 einer Strombilanz eines Bordnetzes mit Anwendung eines Verfahrens zum Betreiben eines Bordnetzes einer Brennkraftmaschine, insbesondere einer Brennkraftmaschine von einem Fahrzeug. Das zweite Diagramm 26 ist ähnlich dem ersten Diagramm 10, sodass hier zumindest teilweise die gleichen Bezugszeichen verwendet werden.

Auch dieses zweite Diagramm 26 zeigt auf der Y-Achse 12 den Strombedarf des Bordnetzes in Ampere [A] an. Zudem wird auf der X-Achse 14 die Zeit in Sekunden [s] angezeigt. Wiederum zeigt eine erste Fläche 16 einen Grundstrombedarf, welcher beispielsweise für Steuergeräte eingesetzt wird. Eine zweite Fläche 18 zeigt den Strombedarf für einen elektrisch beheizbaren Katalysator an, wobei letztendlich hiermit beispielsweise der Strombedarf für ein Heizelement gemeint ist. Auch zeigt eine dritte Fläche 20 den Strombedarf von Dauerverbrauchern, beispielsweise einer Sitzheizung von einem Fahrzeug an. Zusätzlich wird auch hier eine vierte Fläche 22 dargestellt, welche in einzelne Strombedarfsspitzen von Kurzzeitverbrauchern segmentiert ist. Zudem ist ebenfalls eine eingezeichnete Begrenzungslinie 24 eingezeichnet, welche eine Stromgrenze eines Generators darstellt. wie auch in Figur 1 kann bis zu dieser Begrenzungslinie 24 der Strombedarf des Bordnetzes über den Generator abgedeckt werden. Im Gegensatz zu der Darstellung in Figur 1 zeigt die Figur 2 jedoch ein temporäres Abschalten von einem oder mehreren Kurzverbrauchern in einer ersten Zeitspanne bis etwa 110 Sekunden, sodass in diesem Bereich keine Überschreitung der Begrenzungslinie 24 stattfindet und entsprechend der Strombedarf ausschließlich über den Generator abgedeckt werden kann und ein unerwünschter Entladevorgang der Batterie somit gänzlich vermieden wird.

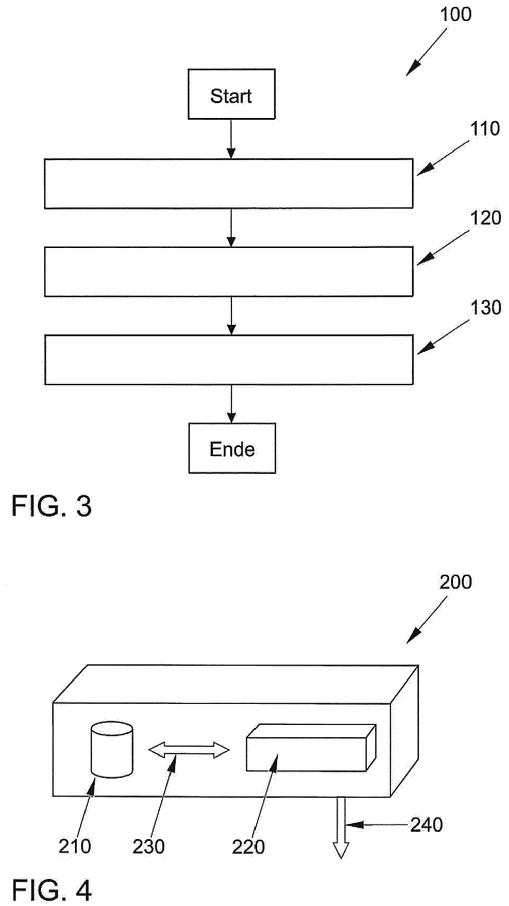

Figur 3 zeigt einen Prozessablauf 100 eines Verfahrens zum Betreiben eines Bordnetzes einer Brennkraftmaschine, insbesondere einer Brennkraftmaschine für ein Fahrzeug. In einem ersten Schritt 110 erfolgt eine Versorgung des Bordnetzes mit Energie in Form von elektrischem Strom mittels mindestens eines Generators und/oder mindestens einer Batterie. In einem zweiten Schritt 120 wird ein Steuergerät 200 und mindestens zwei Verbraucher mittels Energie in Form von elektrischem Strom des Bordnetzes versorgt. In einem dritten Schritt 130 wird eine Stromgrenze des mindestens einen Generators festgelegt, bis zu welcher eine Versorgung des Bordnetzes ausschließlich mittels des mindestens einen Generators mit Energie in Form von elektrischem Strom vollzogen wird. Beim Erreichen und/oder Überschreiten der Stromgrenze des mindestens einen Generators wird zumindest ein Verbraucher zumindest zeitweise mittels des Steuergeräts 200 abgeschaltet und/oder dessen Leistung abgeregelt.

Figur 4 zeigt ein Steuergerät 200 zum Betreiben eines Bordnetzes einer Brennkraftmaschine, insbesondere einer Brennkraftmaschine für ein Fahrzeug. Das Steuergerät 200 ist dabei lediglich schematisch dargestellt und kann beispielsweise in einem Fahrzeug angeordnet beziehungsweise verbaut werden. In dem Steuergerät 200 werden ebenfalls schematisch ein Speicher 210 und eine Recheneinheit 220 dargestellt. Ein Doppelpfeil 230 stellt dabei den funktionellen Zusammenhang zwischen dem Speicher 210 und der Recheneinheit 220 dar. Zudem symbolisiert ein Blockpfeil 240 eine Schnittstelle, beispielsweise in Form einer elektrischen Leitung, zu möglichen anderen Verbrauchern.

### Bezugszeichenliste

- 10: erstes Diagramm
- 12: Y-Achse
- 14: X-Achse
- 16: erste Fläche
- 18: zweite Fläche
- 20: dritte Fläche
- 22: vierte Fläche
- 24: Begrenzungslinie
- 26: zweites Diagramm
- 100: Prozessablauf
- 110: erster Schritt
- 120: zweiter Schritt
- 130: dritter Schritt
- 200: Steuergerät
- 210: Speicher
- 220: Recheneinheit
- 230: Doppelpfeil
- 240: Blockpfeil

## Patentansprüche

1. Verfahren zum Betreiben eines Bordnetzes einer Brennkraftmaschine und eines Steuergeräts umfassend die folgenden Schritte:
Versorgen des Bordnetzes mit Energie in Form von elektrischem Strom mittels mindestens eines Generators und/oder mindestens einer Batterie;
Versorgen des Steuergeräts und von mindestens zwei Verbrauchern mittels Energie in Form von elektrischem Strom des Bordnetzes;
Festlegen einer Stromgrenze des mindestens einen Generators, bis zu welcher eine Versorgung des Bordnetzes ausschließlich mittels des mindestens einen Generators mit Energie in Form von elektrischem Strom vollzogen wird,
**dadurch gekennzeichnet, dass**
das Steuergerät beim Erreichen und/oder Überschreiten der Stromgrenze des mindestens einen Generators zumindest einen der Verbraucher zumindest zeitweise abschaltet und/oder dessen Leistung abregelt.

2. Verfahren nach Anspruch 1, wobei ein Abschaltvorgang und/oder ein Leistungsabregelungsvorgang des zumindest einen Verbrauchers zusätzlich in Abhängigkeit zumindest eines Zustandes der Brennkraftmaschine und/oder einer Klassifizierung des zumindest einen Verbrauchers vollzogen wird.

3. Verfahren nach Anspruch 2, wobei der zumindest eine Zustand der Brennkraftmaschine ausgewählt ist aus: Motorbetriebspunkt, Dynamik einer Betriebspunktänderung, Umgebungsdruck, Umgebungstemperatur, Kühlmitteltemperatur, Abgastemperatur vor und/oder hinter einem Turbolader der Brennkraftmaschine, Temperatur zumindest einer Abgasreinigungskomponente, modellierte Partikelrohemissionen in einem aktuellen Betriebspunkt, modellierte Stickoxid-Rohemissionen in einem aktuellen Betriebspunkt, Füllstand in einem Partikelfilter der Brennkraftmaschine, Füllstand eines Stickoxidspeicherkatalysators der Brennkraftmaschine und/oder ein eingelegter Gang eines durch die Brennkraftmaschine angetriebenen Fahrzeugs.

4. Verfahren nach einem der Ansprüche 2 bis 3, wobei eine Klassifizierung des zumindest einen Verbrauchers in Dauerverbraucher und Kurzzeitverbraucher vollzogen wird, sodass der Abschaltvorgang und/oder der Leistungsabregelungsvorgang des zumindest einen Verbrauchers gemäß einer Entscheidungsstruktur basierend auf dieser Klassifizierung mittels des Steuergeräts vollzogen wird.

5. Verfahren nach Anspruch 4, wobei die Klassifizierung der Dauerverbraucher eine Unterteilung in Komfortverbraucher und Systemverbraucher umfasst, sodass der Abschaltvorgang und/oder der Leistungsabregelungsvorgang des zumindest einen Verbrauchers gemäß einer Entscheidungsstruktur basierend auf dieser Unterteilung mittels des Steuergeräts vollzogen wird.

6. Verfahren nach einem der vorherigen Ansprüche, wobei der zumindest eine Verbraucher ausgewählt ist aus: Heizelement eines elektrisch beheizbaren Katalysators stromauf oder in einem Substrat des Katalysators, Sitzheizung, Heckscheibenheizung, Frontscheibenheizung, Klimaanlage, Steuergerät, Unterhaltungselektronik, Abblendlicht, Nebellicht, Sensor, emissionsrelevanter Verbraucher, gesetzesrelevanter Verbraucher.

7. Verfahren nach einem der vorherigen Ansprüche, wobei das Verfahren für maximal 150 Sekunden nach einem Start der Brennkraftmaschine betrieben wird.

8. Verfahren nach einem der vorherigen Ansprüche, wobei das Verfahren zumindest bei einem Kaltstart der Brennkraftmaschine betrieben wird, wobei der Kaltstart insbesondere durch eine Umgebungstemperatur von höchstens 0 °C, vorzugsweise höchstens -5 °C, besonders bevorzugt höchstens -10 °C, und/oder eine Brennkraftmaschinentemperatur, welche der Umgebungstemperatur entspricht, charakterisiert wird.

9. Verfahren nach einem der vorherigen Ansprüche, wobei vor einem Abschaltvorgang und/oder einem Leistungsabregelungsvorgang eines emissionsrelevanten Verbrauchers und/oder eines gesetzesrelevanten Verbrauchers ein Abschaltvorgang und/oder Leistungsabregelungsvorgang eines nicht emissionsrelevanten Verbrauchers und/oder eines nicht gesetzesrelevanten Verbrauchers vollzogen wird.

10. Verfahren nach einem der vorherigen Ansprüche, wobei vor einem Abschaltvorgang und/oder einem Leistungsabregelungsvorgang eines Heizelements eines elektrisch beheizbaren Katalysators stromauf oder in einem Substrat des Katalysators ein Abschaltvorgang und/oder Leistungsabregelungsvorgang eines nicht emissionsrelevanten Verbrauchers und/oder eines nicht gesetzesrelevanten Verbrauchers vollzogen wird.

11. Verfahren nach einem der vorherigen Ansprüche, wobei vor einem Abschaltvorgang und/oder einem Leistungsabregelungsvorgang eines emissionsrelevanten Verbrauchers und/oder eines gesetzesrelevanten Verbrauchers ein Abschaltvorgang und/oder Leistungsabregelungsvorgang eines Heizelements eines elektrisch beheizbaren Katalysators stromauf oder in einem Substrat des Katalysators vollzogen wird.

12. Verfahren nach einem der Ansprüche 9 bis 11, wobei der Abschaltvorgang und/oder Leistungsabregelungsvorgang eines Heizelements eines elektrisch beheizbaren Katalysators stromauf oder in einem Substrat des Katalysators zumindest teilweise vollzogen wird.

13. Verfahren nach einem der vorherigen Ansprüche, wobei ein Abschaltvorgang und/oder ein Leistungsabregelungsvorgang eines nicht emissionsrelevanten Verbrauchers und/oder eines nicht gesetzesrelevanten Verbrauchers für einen Zeitraum von kürzer als 3 Sekunden, insbesondere kürzer als 1,5 Sekunden, vorzugsweise für 2 Sekunden vollzogen wird, wenn ein Kurzzeitverbraucher den Strom benötigt.

14. Steuergerät (200) zum Betreiben eines Bordnetzes einer Brennkraftmaschine, insbesondere einer Brennkraftmaschine eines Fahrzeugs, wobei das Bordnetz und das Steuergerät (200) von mindestens einem Generator und/oder mindestens einer Batterie mit elektrischem Strom versorgbar sind, umfassend zumindest eine elektrische Leitung, welche mit zumindest zwei Verbrauchern verbindbar ist, zumindest eine Recheneinheit und zumindest einen Speicher (210),
**dadurch gekennzeichnet, dass**
in dem Speicher (210) ein Programm abgelegt ist, das eingerichtet ist, das Verfahren gemäß Ansprüchen 1 bis 13 auszuführen.

15. Verwendung des Steuergeräts (200) gemäß Anspruch 14 in einem Verfahren gemäß Ansprüchen 1 bis 13.
